# EUROPEAN PATENT APPLICATION

(11) **EP 4 553 551 A2**
(43) Date of publication of application: **14.05.2025**
(21) Application number: 24206804.7
(22) Date of filing: 16.10.2024
(51) Int. Cl.: G02B 6/42

(54) **OPTICAL ENGINE LID WITH OPTICAL FEEDTHROUGH**

(30) Priority: 16.10.2023 US 202318487623
(71) Applicant: Cisco Technology, Inc., San Jose, CA 95134-1706 (US)
(72) Inventor: Schlepple, Norbert, San Jose, CA 95134-1706 (US); Peternel, Joyce J. M., San Jose, CA 95134-1706 (US)
(74) Representative: Noble, Nicholas

(57) **Abstract**

An optical engine and methods of assembly are disclosed. In one aspect, an optical engine has a lid defining an optical feedthrough configured to fully encircle an optical channel received therein. The optical feedthrough provides an access opening for the optical channel to be fed through so that the optical channel is coupled with a photonic integrated circuit of the optical engine.

## Description

### TECHNICAL FIELD

Embodiments presented in this disclosure generally relate to opto-electronic devices, and more specifically, to optical engines for opto-electronic apparatuses.

### BACKGROUND

Opto-electronic apparatuses, such as for Co-Packaged Optical (CPO) and OnBoard Optics (OBO) applications, can include optical engines configured for realizing photoelectric signal conversion. Optical channels, including optical connectors and fiber pigtails, can be optically coupled with such optical engines. Designing access for an optical channel to optically couple with an optical channel has presented certain challenges. For example, access openings for optical engines to receive optical channels have typically been defined by multiple components, which presents certain manufacturing and tolerance stack-up challenges. Thus, there is a need for improved optical channel access to an optical engine.

### BRIEF DESCRIPTION OF THE DRAWINGS

So that the manner in which the above-recited features of the present disclosure can be understood in detail, a more particular description of the disclosure, briefly summarized above, may be had by reference to embodiments, some of which are illustrated in the appended drawings. It is to be noted, however, that the appended drawings illustrate typical embodiments and are therefore not to be considered limiting; other equally effective embodiments are contemplated.
FIG. 1 is a schematic view of an opto-electronic apparatus according to one or more embodiments of the present disclosure.
FIG. 2A is a perspective view of an optical engine according to an embodiment of the present disclosure, and depicts an optical feedthrough defined by a lid of the optical engine receiving an optical channel.
FIG. 2B is a schematic cross-sectional view of the optical engine of FIG. 2A with the optical channel received by the optical feedthrough.
FIG. 3A is a perspective view of an optical engine according to another embodiment of the present disclosure, and depicts an optical feedthrough defined by a lid of the optical engine receiving an optical channel.
FIG. 3B is a schematic cross-sectional view of the optical engine of FIG. 3A with the optical channel received by the optical feedthrough.
FIG. 4A is a perspective view of an optical engine according to yet another embodiment of the present disclosure, and depicts an optical channel received by an optical feedthrough defined by a lid of the optical engine.
FIG. 4B is a perspective view of the optical engine of FIG. 4A with the lid of the optical engine shown transparent for illustrative purposes.
FIG. 4C is a schematic cross-sectional view of the optical engine of FIG. 4A with the optical channel received by the optical feedthrough.
FIG. 5A is a perspective view of an optical engine according to a further embodiment of the present disclosure, and depicts optical channels received by respective optical feedthroughs defined by a lid of the optical engine.
FIG. 5B is a perspective view of an optical engine according to a further embodiment of the present disclosure, and depicts optical channels received by respective opposing optical feedthroughs defined by a lid of the optical engine.
FIG. 5C is a perspective view of an optical engine according to a further embodiment of the present disclosure, and depicts optical channels received by respective neighboring optical feedthroughs defined by a lid of the optical engine.
FIG. 6A is a perspective view of an optical engine according to another embodiment of the present disclosure, and depicts an optical channel being received by an optical feedthrough defined by a top wall of a lid of the optical engine.
FIG. 6B is a perspective view of an optical engine according to yet another embodiment of the present disclosure, and depicts an optical channel being received by an optical feedthrough defined by a side wall and a top wall of a lid of the optical engine.
FIG. 7A is a front view of an optical engine according to an additional embodiment of the present disclosure, and depicts an optical feedthrough defined by a lid of the optical engine having a keyway.
FIG. 7B is a front view of an optical engine according to another embodiment of the present disclosure, and depicts an optical feedthrough defined by a lid of the optical engine having a key.
FIG. 7C is a front view of an optical engine according to another embodiment of the present disclosure, and depicts an optical feedthrough defined by a lid of the optical engine having an asymmetric key.
FIG. 7D is a schematic cross-sectional view of an optical engine according to a further embodiment of the present disclosure, and depicts an optical channel received by an optical feedthrough defined by a lid of the optical engine.
FIG. 8A is a perspective view of an optical engine according to a further embodiment of the present disclosure, and depicts and optical feedthrough defined by a lid that includes two shells, including an optical shell and a thermal shell.
FIG. 8B is a perspective view of the optical engine of FIG. 8A, and depicts the optical shell separated from the thermal shell.
FIG. 9A is a schematic cross-sectional view of an optical engine according to a further embodiment of the present disclosure, and depicts an optical channel received by an optical feedthrough defined by a lid of the optical engine.
FIG. 9B is a perspective view of the optical engine of FIG. 9A.
FIG. 9C is a perspective view of an opto-electronic apparatus that includes a plurality of optical engines configured as in FIGS. 9A and 9B.
FIG. 10 is a flow diagram for a method of assembling an optical engine according to an embodiment of the present disclosure.

To facilitate understanding, identical reference numerals have been used, where possible, to designate identical elements that are common to the figures. It is contemplated that elements disclosed in one embodiment may be beneficially used in other embodiments without specific recitation.

### DESCRIPTION OF EXAMPLE EMBODIMENTS

### OVERVIEW

One embodiment presented in this disclosure is an optical engine. The optical engine includes a lid defining an optical feedthrough configured to fully encircle an optical channel received therein. The optical engine also includes a PIC covered by the lid and configured to optically couple with the optical channel.

Another embodiment presented in this disclosure is an opto-electronic apparatus. The opto-electronic apparatus includes an optical channel and at least one optical engine. The at least one optical engine includes a lid defining an optical feedthrough that fully encircles the optical channel received therein. The at least one optical engine also includes a photonic integrated circuit covered by the lid and optically coupled with the optical channel.

A further embodiment presented in this disclosure is a method. The method includes coupling a photonic integrated circuit (PIC) with a substrate; coupling an optical element with the PIC; and coupling a lid with the substrate so that an optical feedthrough defined by the lid is aligned with the optical element, the optical feedthrough being configured to fully encircle an optical channel received therein.

### EXAMPLE EMBODIMENTS

Provided herein are various embodiments of optical engines. The optical engines disclosed herein can provide improved access for optical channels to connect thereto. In one example aspect, an optical engine can include a lid defining an optical feedthrough configured to fully encircle at least one optical channel received therein. The optical feedthrough provides an access opening for the optical channel to be fed through so that the optical channel can be coupled with a Photonic Integrated Circuit (PIC) of the optical engine. A method of assembling an optical engine is also provided.

An optical engine having a lid that defines an optical feedthrough that fully encircles an optical channel received therein can be advantageous for a variety of reasons. For instance, such an arrangement allows for the access opening to the optical engine to be formed by a single component, which can improve the manufacturability of the optical engine and can reduce or eliminate the need to consider the mechanical tolerances between two components to form the optical feedthrough. Moreover, optical engines provided herein can allow for the access opening or optical feedthrough to be made smaller compared conventional designs, which is beneficial for facilitating optical mating between the optical channel and the PIC, and also keeps foreign debris from entering the interior of the optical engine. Further, optical engines provided herein can allow for unique access through a top of the optical engine. Also, optical engines provided herein can include multiple shells forming the lid, enabling the shells to be formed of different materials, which can enhance the optical and thermals aspects of the optical engine. In addition, some optical engines provided herein can include integrated optical and mechanical mating features that, among other benefits, can allow for elimination or reduction of mid-board connectors in embodiments in which such optical engines are incorporated into an opto-electronic apparatus. Furthermore, some optical engines provided herein can include coarse alignment features at the optical feedthrough, which can enhance feedthrough of an optical channel through or into the optical feedthrough. Other benefits, advantages, and technical effects associated with the disclosed optical engines other than those expressly listed are possible. Example embodiments of optical engines that can achieve one or more of the noted benefits and/or advantages are provided below.

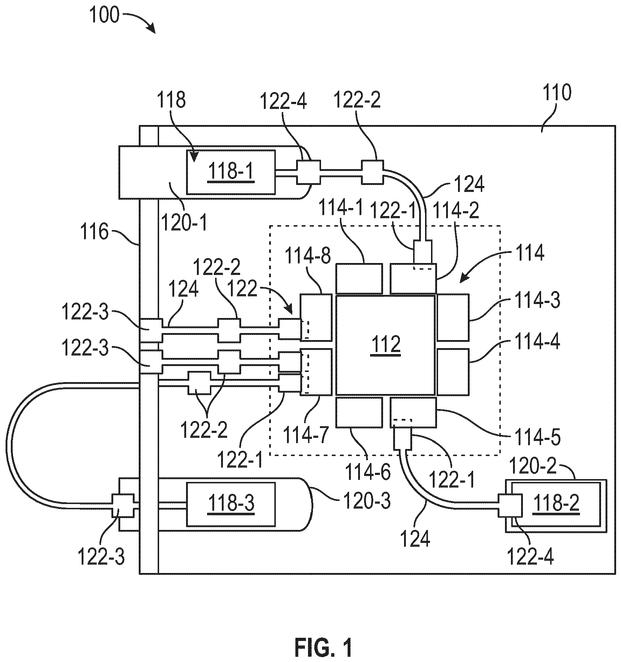

FIG. 1 is a schematic view of an opto-electronic apparatus 100 according to one or more embodiments. In FIG. 1, the opto-electronic apparatus 100 is configured as a Co-Packaged Optical (CPO) system, or CPO system. As shown, the opto-electronic apparatus 100 includes, among other components, a substrate 110, an electronic integrated circuit (IC) 112, and one or more optical engines 114-1 through 114-8 (generically or collectively, optical engine(s) 114). The electronic IC 112 is centrally located on the substrate 110 and the optical engines 114 are arranged laterally outward from the electronic IC 112. Other arrangements of the electronic IC 112 and the optical engines 114 are also contemplated. The electronic IC 112 and the optical engines 114 can have any suitable functionality. The electronic IC 112 can be a Network Processor Unit (NPU), for example. The optical engines 114 can be configured for realizing photoelectric signal conversion. A faceplate 116 is coupled with the substrate 110. The faceplate 116 can provide a pluggable interface with the opto-electronic apparatus 100.

In some embodiments, the substrate 110 conductively couples the electronic IC 112 and the optical engines 114. Particularly, the substrate 110 can include one or more layers, such as conductive layer(s), semiconductor layer(s), and/or insulator layer(s). The substrate 110 can further include one or more conductive vias extending between layers, and/or extending to a top surface and/or a bottom surface of the substrate 110. For instance, the substrate 110 can include first conductive connections on a top surface of the substrate 110, second conductive connections on a bottom surface of the substrate 110, and conductive vias connecting the first and second conductive connections. In this way, the electronic IC 112 and the optical engines 114 can be mounted on the top surface and connected through the substrate 110 to a printed circuit board (PCB) or other device connected to the bottom surface.

In addition, the opto-electronic apparatus 100 includes one or more light sources. For the depicted embodiment of FIG. 1, the opto-electronic apparatus 100 includes a plurality of remote light sources (RLS) 118-1, 118-2, 118-3 (generically or collectively, RLS(s) 118). In some embodiments, the RLS 118 can be lasers and can be either single- or multi-wavelength light sources. RLS 118-1, 118-2, 118-3 are disposed within respective light source enclosures 120-1, 120-2, 120-3.

The opto-electronic apparatus 100 further includes connectors and one or more optical fibers. For the illustrated embodiment of FIG. 1, the opto-electronic apparatus 100 includes a plurality of optical connectors (generically or collectively, optical connector(s) 122) and a plurality of optical fibers (generically or collectively, optical fiber(s) 124). The optical connectors 122 include a set of optical engine connectors 122-1 (not all of which are labeled) each configured to optically couple with one of the optical engines 114, a set of mid-board optical connectors 122-2 that optically couple one optical fiber with another, a set of faceplate optical connectors 122-3 that each offer optical coupling at the faceplate 116, and a set of RLS optical connectors 122-4 each configured to optically couple with one of the RLS 118. The optical fibers 124 (not all of which are labeled in FIG. 1) can carry optical signals, e.g., from one of the RLS 118 to a Photonics Integrated Circuit (PIC) of one of the optical engines 114.

In accordance with inventive aspects of the present disclosure, one or more of the optical engines 114 of the opto-electronic apparatus 100 can include a lid that defines an optical feedthrough configured to fully encircle an optical channel received therein. The optical feedthroughs provide access openings for respective optical channels to be fed therethrough. For the example embodiment of FIG. 1, each optical engine 114 has a lid defining an optical feedthrough. Optical engines 114-2, 114-5, 114-7 are each shown with an optical engine connector 122-1 fed through their respective optical feedthroughs (as represented by the dashed lines). Various example embodiments detailing such inventive aspects are provided below.

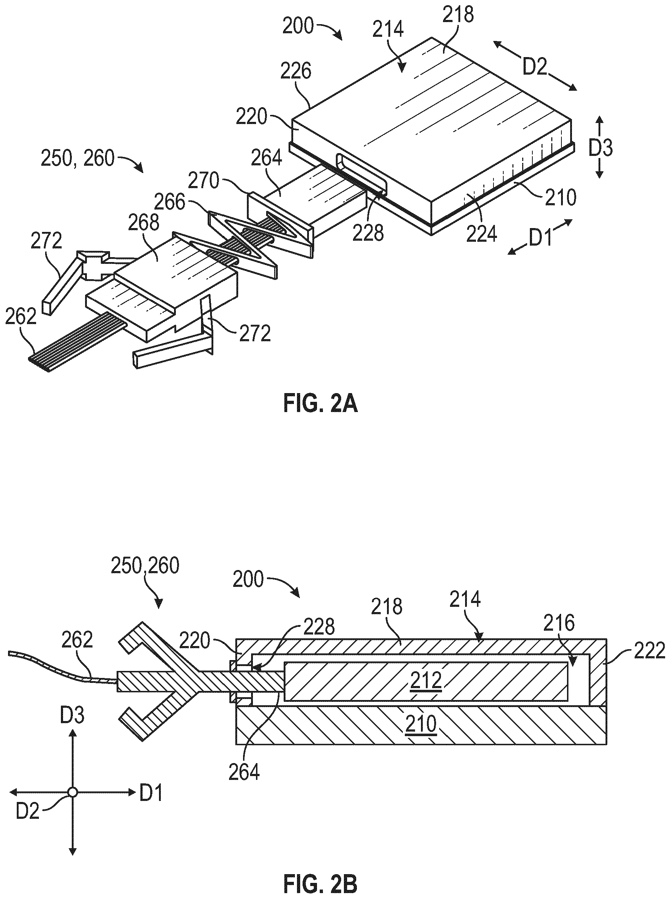

With reference now to FIGS. 2A and 2B, an optical engine 200 according to one embodiment of the present disclosure is disclosed. FIG. 2A is a perspective view of the optical engine 200, and also depicts an optical channel 250. FIG. 2B is a schematic cross-sectional view of the optical engine 200 receiving the optical channel 250. The optical engine 200 can be implemented in an opto-electronic apparatus, such as the opto-electronic apparatus 100 of FIG. 1.

As shown, the optical engine 200 includes a substrate 210, a PIC 212, and a lid 214. The PIC 212 is disposed on the substrate 210 and can include one or more waveguides. The PIC 212 optically couples with the optical channel 250. The lid 214 and the substrate 210 collectively enclose the PIC 212, e.g., within an interior 216. The PIC 212 is covered by the lid 214. The lid 214 includes a top wall 218 and a plurality of sidewalls, including a forward wall 220, a rear wall 222, a first side wall 224, and a second side wall 226. The forward wall 220 and the rear wall 222 are spaced from one another, e.g., along a first direction D1. The first side wall 224 and the second side wall 226 are spaced from one another, e.g., along a second direction D2. The first side wall 224 and the second side wall 226 extend between and connect the forward wall 220 and the rear wall 222. The forward wall 220, the rear wall 222, the first side wall 224, and the second side wall 226 each connect to the top wall 218 and extend, e.g., along a third direction D3, which is a vertical direction in this example embodiment. The first direction D1, the second direction D2, and the third direction D3 are mutually perpendicular and form an orthogonal direction system.

Further, for the depicted embodiment of FIGS. 2A and 2B, the optical channel 250 is configured as an optical connector 260. The optical connector 260 includes an optical fiber 262, an optical ferrule 264, a spring 266 or biasing member, and an external connector housing 268. The optical ferrule 264 is optically coupled with the optical fiber 262. A flange 270 can couple the optical ferrule 264 with the spring 266. The spring 266 functions to bias the optical ferrule 264 in position relative to the mating interface on the PIC 212 or other optical element. The external connector housing 268 can mechanically couple to a structure, such as a load plate or stiffener (not shown), via one or more latches 272 of the external connector housing 268.

As further shown in FIGS. 2A and 2B, the lid 214 of the optical engine 200 defines an optical feedthrough 228 that is configured to fully encircle the optical channel 250 received therein, e.g., as shown in FIG. 2B. In this regard, the optical feedthrough 228 provides an access opening for the optical channel 250 to be fed through so that the optical channel 250 can be coupled with the PIC 212 of the optical engine 200, or more specifically, so that the optical ferrule 264 can be optically coupled with the PIC 212, either directly or indirectly. In this regard, optical signals can traverse between the optical fiber 262 and the PIC 212 by way of the optical ferrule 264. In this example embodiment, the optical ferrule 264 is fed through the optical feedthrough 228 while the spring 266 and external connector housing 268 remain external to the interior 216 of the optical engine 200. As noted above, the external connector housing 268 can mechanically couple to a structure to maintain the optical ferrule 264 in position relative to the PIC 212.

Further, in this example embodiment, the forward wall 220 defines the optical feedthrough 228. However, as will be disclosed further herein, in alternative example embodiments, other wall(s) of the lid 214 can define the optical feedthrough 228. The optical feedthrough 228 has a rectangular shape with rounded corners in this example embodiment, but other shapes are possible. In FIG. 2A, the optical feedthrough 228 is sized to accommodate the optical ferrule 264 of the optical connector 260, but other sizes are possible.

Advantageously, the optical feedthrough 228, which is configured to fully encircle the optical channel 250 received therein, defined by the lid 214 allows for the access opening to be made smaller compared conventional designs, which is beneficial for facilitating optical mating of the optical ferrule 264 and the PIC 212 or waveguides thereof and also for keeping foreign debris from entering the interior 216 of the optical engine 200. Moreover, the optical feedthrough 228 being defined by the lid 214, and only the lid 214, can improve manufacturing efficiency as the optical feedthrough 228 need only be formed in a single component (i.e., the lid 214). In addition, the optical feedthrough 228 being defined by a single component (i.e., the lid 214) can reduce or eliminate the need to consider the mechanical tolerances between two components to form the optical feedthrough 228, as in conventional designs.

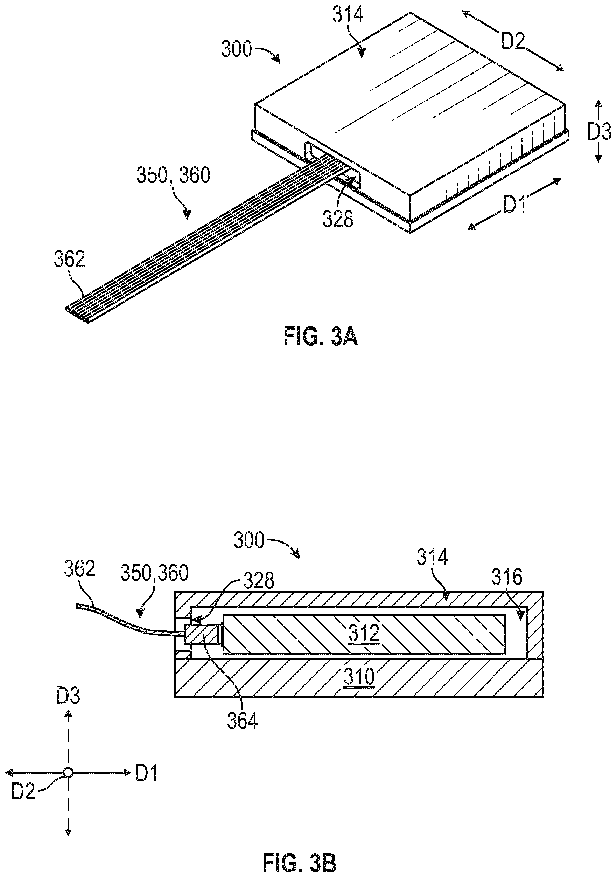

In some further embodiments, an optical channel received or fed through an optical feedthrough defined by a lid of an optical engine can be a fiber pigtail. By way of example, with reference now to FIGS. 3A and 3B, FIG. 3A is a perspective view of an optical engine 300, and depicts an optical feedthrough 328 defined by a lid 314 of the optical engine 300 receiving an optical channel 350. FIG. 3B is a schematic cross-sectional view of the optical engine 300 with the optical channel 350 fed through or received by the optical feedthrough 328. The optical engine 300 is configured in a similar manner as the optical engine 200 of FIGS. 2A and 2B and thus will not be described in detail for the sake of brevity.

The optical channel 350, as noted above, is configured as a fiber pigtail 360. The fiber pigtail 360 includes an optical fiber 362 (or fibers) that are fed through the optical feedthrough 328 of the lid 314 and are permanently coupled with a PIC 312 of the optical engine 300 via a Fiber Array Unit (FAU), or FAU 364. The FAU 364 is disposed within an interior 316 of the optical engine 300 defined by the lid 314 and a substrate 310, and is optically coupled with the PIC 312. In some embodiments, the FAU 364 is positioned, at least in part, within the optical feedthrough 328. In other embodiments, the FAU 364 can be positioned entirely within the interior 316, or rather, not positioned in part within the optical feedthrough 328.

The optical feedthrough 328 has a rectangular shape with rounded corners in this example embodiment, but other shapes are possible. The optical feedthrough 328 is sized to accommodate the FAU 364, but other sizes are possible.

In yet other embodiments of the present disclosure, an optical engine can include a lid extension. In such embodiments, the lid of an optical engine can extend beyond the substrate/package outline for extra working distance and material volume. This may allow for, among other benefits, the mechanical latching mechanism of an optical connector to latch to the lid rather than another structure.

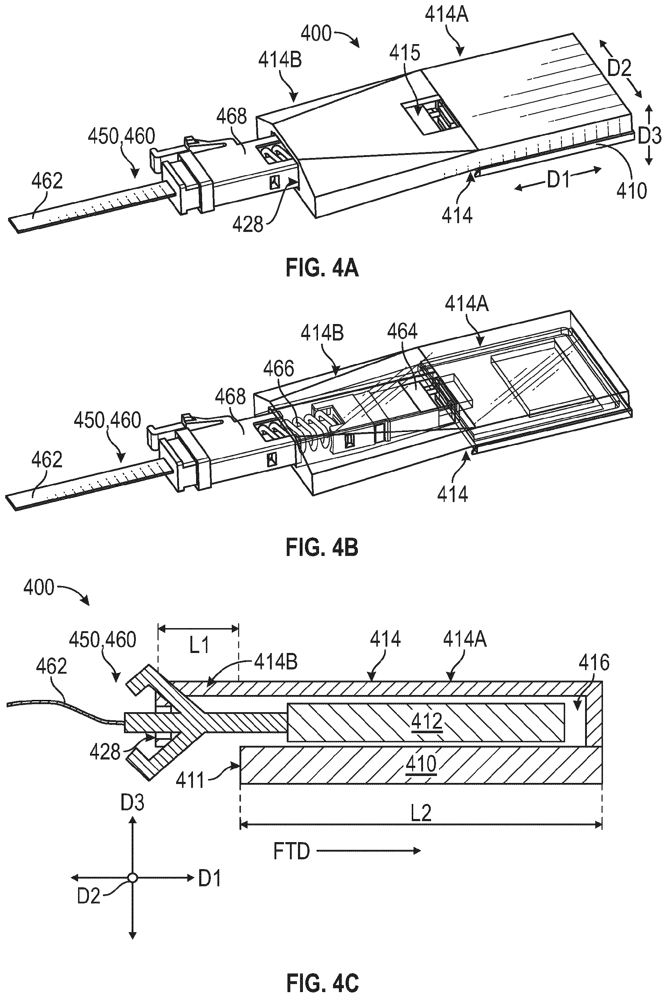

By way of example, with reference now to FIGS. 4A, 4B, and 4C, FIG. 4A is a perspective view of an optical engine 400, and depicts an optical channel 450 received by an optical feedthrough 428 defined by a lid 414 of the optical engine 400. FIG. 4B is a perspective view of the optical engine 400 with the lid 414 of the optical engine 400 shown transparent for illustrative purposes. FIG. 4C is a schematic cross-sectional view of the optical engine 400 with the optical channel 450 received by the optical feedthrough 428.

As shown, the lid 414 has a lid extension 414B that extends beyond a forward edge 411 of a substrate 410 of the optical engine 400. In this regard, the lid 414 extends beyond an outline of the substrate 410, e.g., along the first direction D1. The lid extension 414B can extend from a lid base 414A. The lid extension 414B is defined as the portion of the lid 414 that extends beyond the forward edge 411 of the substrate 410 and the lid base 414A is defined as the portion of the lid 414 that extends rearward of the forward edge 411 of the substrate 410 along the first direction D1. The lid base 414A generally covers a PIC 412 and the substrate 410. The lid base 414A and the lid extension 414B can be formed as a unitary or single-piece, monolithic component.

In some embodiments, the lid extension 414B extends along the first direction D1 a length L1 that is at least a quarter of a length L2 of the substrate 410. In some embodiments, the lid extension 414B extends along the first direction D1 so as to be operable to accommodate an optical ferrule 464 and a spring 466 of the optical channel 450, e.g., as shown best in FIG. 4B. That is, the optical ferrule 464 and the spring 466 can be fed through the optical feedthrough 428, which is defined by the lid extension 414B in this example embodiment, and can be accommodated within an interior 416 of the optical engine 400. The optical ferrule 464 is optically coupled with an optical fiber 462 (or fibers). An external optical connector housing 468 can be positioned, at least in part, within the optical feedthrough 428. The external optical connector housing 468 can be latched to the lid 414, or rather, the lid extension 414B. The optical channel 450 is configured as an optical connector 460 in this embodiment, which is configured in a similar manner as the optical channel 250 of FIGS. 2A and 2B.

In yet further embodiments, the lid extension 414B can define a look-through 415 that allows for visibility of an optical interface where the optical ferrule 464 interfaces with the PIC 412 or optical component thereof. The look-through 415 can be defined as an opening in the lid 414, e.g., as shown in FIG. 4A, or can be configured as a window, e.g., formed of glass. The look-through 415 can provide a means to view the optical interface, which may be beneficial to ensure the optical connector 460 has been properly fed through the optical feedthrough 428 with the optical ferrule 464 positioned in place relative to the PIC 412 or other optical component (e.g., a lens array).

In some further embodiments of the present disclosure, a lid of an optical engine can define two or more optical feedthroughs to accommodate multiple optical channels. Accordingly, in such embodiments, a lid of an optical engine can define a plurality of optical feedthroughs that can receive respective optical channels. Such embodiments can be useful for Onboard Optics (OBO) applications.

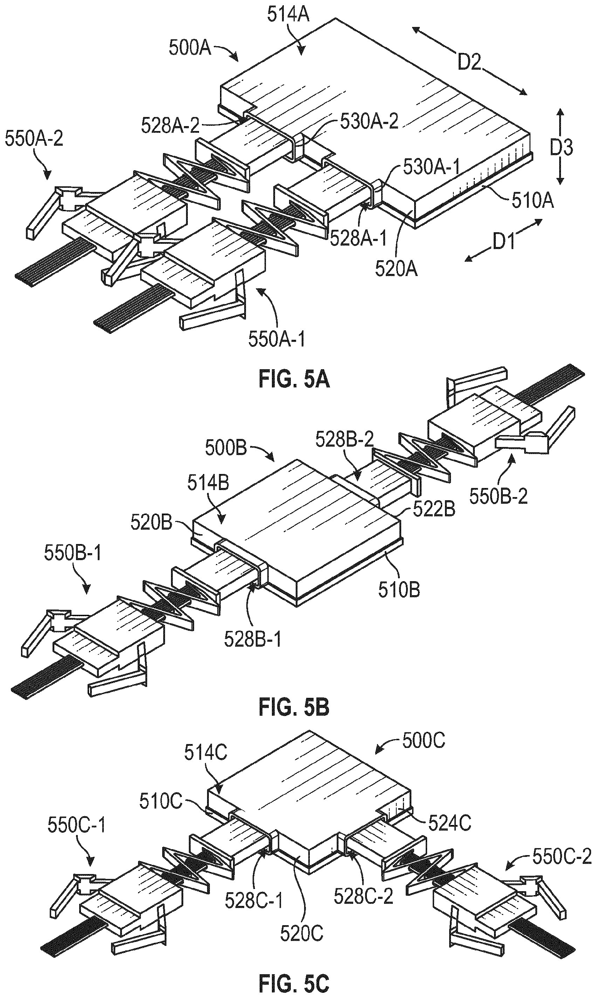

As one example, FIG. 5A is a perspective view of an optical engine 500A having a lid 514A that defines multiple optical feedthroughs. The lid 514A is coupled with a substrate 510A and together the lid 514A and the substrate 510A enclose a PIC. In FIG. 5A, the plurality of optical feedthroughs defined by the lid 514A include a first optical feedthrough 528A-1 and a second optical feedthrough 528A-2 defined by a same sidewall of the lid 514A, which in this example embodiment is a forward wall 520A. The first and second optical feedthroughs 528A-1, 528A-2 are each configured to receive respective optical channels 550A-1, 550A-2, which are both configured in a similar manner as the optical channel 250 of FIGS. 2A, 2B.

In some embodiments, an optical feedthrough defined by a lid can be defined by a sidewall and a lead-draft extending from a wall of the lid. For example, as further shown in FIG. 5A, the lid 514A has a first lead-in draft 530A-1 that extends outward (a direction opposite of the interior of the optical engine 500A) from the forward wall 520A. The forward wall 520A and the first lead-in draft 530A-1 collectively define the first optical feedthrough 528A-1. The lid 514A also has a second lead-in draft 530A-2 that extends outward from the forward wall 520A. The second lead-in draft 530A-2 is spaced from the first lead-in draft 530A-1, e.g., along the second direction D2. The forward wall 520A and the second lead-in draft 530A-2 collectively define the second optical feedthrough 528A-2. The lead-in drafts 530A-1, 530A-2 can facilitate feedthrough of the optical channels 550A-1, 550A-2 through their respective optical feedthroughs 528A-1, 528-2.

As a second example, FIG. 5B is a perspective view of an optical engine 500B having a lid 514B that defines multiple optical feedthroughs. The lid 514B is coupled with a substrate 510B and together the lid 514B and the substrate 510B enclose a PIC. In FIG. 5B, the plurality of optical feedthroughs defined by the lid 514B include a first optical feedthrough 528B-1 and a second optical feedthrough 528B-2 defined by opposing sidewalls of the lid 514B. In this example embodiment, the opposing sidewalls include the forward wall 520B and the rear wall 522B. The first optical feedthrough 528B-1 is defined by the forward wall 520B (and in part by a lead-in draft) and the second optical feedthrough 528B-2 is defined by the rear wall 522B (and in part by a lead-in draft). The first and second optical feedthroughs 528B-1, 528B-2 are each configured to receive respective optical channels 550B-1, 550B-2, which are both configured in a similar manner as the optical channel 250 of FIGS. 2A, 2B.

As a third example, FIG. 5C is a perspective view of an optical engine 500C having a lid 514C that defines multiple optical feedthroughs. The lid 514C is coupled with a substrate 510C and together the lid 514C and the substrate 510C enclose a PIC. In FIG. 5C, the plurality of optical feedthroughs defined by the lid 514C include a first optical feedthrough 528C-1 and a second optical feedthrough 528C-2 defined by adjacent or neighboring sidewalls of the lid 514C. In this example embodiment, the neighboring sidewalls include the forward wall 520C and the first side wall 524C. The first optical feedthrough 528C-1 is defined by the forward wall 520C (and in part by a lead-in draft) and the second optical feedthrough 528C-2 is defined by the first side wall 524C (and in part by a lead-in draft). The first and second optical feedthroughs 528C-1, 528C-2 are each configured to receive respective optical channels 550C-1, 550C-2, which are both configured in a similar manner as the optical channel 250 of FIGS. 2A, 2B.

In some further embodiments of the present disclosure, a horizontally-oriented wall (e.g., a top wall) of a lid of an optical engine can define, at least in part, an optical feedthrough configured to fully encircle an optical channel received therein.

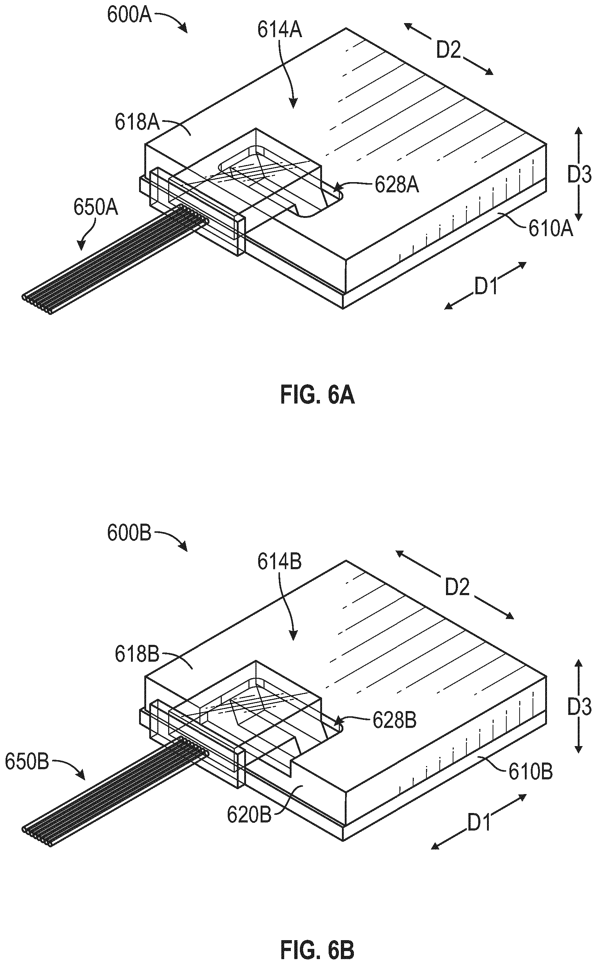

As one example, FIG. 6A is a perspective view of an optical engine 600A. The optical engine 600A has a lid 614A that is coupled with a substrate 610A. The lid 614A and the substrate 610A collectively enclose a PIC. In FIG. 6A, a top wall 618A of the lid 614A defines an optical feedthrough 628A configured to fully encircle an optical channel 650A received therein. The optical channel 650A can be a pigtail or connector application.

As another example, FIG. 6B is a perspective view of an optical engine 600B. The optical engine 600B has a lid 614B that is coupled with a substrate 610B. The lid 614B and the substrate 610B collectively enclose a PIC. In FIG. 6B, a horizontally-oriented wall (e.g., a top wall 618B) and a vertically-oriented wall (e.g., a forward wall 620B) collectively define an optical feedthrough 628B configured to fully encircle an optical channel 650B received therein. The optical channel 650B can be a pigtail or connector application.

An optical feedthrough defined, at least in part, by a top wall of a lid, e.g., as shown in FIGS. 6A and 6B, can provide enhanced access to connect an optical channel to an optical engine in some applications, or for installation purposes in the case of a pigtail optical channel. An optical feedthrough defined by both a sidewall and a top wall of the lid can be particularly useful as such an optical feedthrough accommodates insertion or feedthrough of an optical channel from both a vertical and horizontal perspective.

In some further embodiments of the present disclosure, an optical feedthrough defined by a lid of an optical engine can include a feature (or features) that facilitates feedthrough or insertion of an optical channel therethrough.

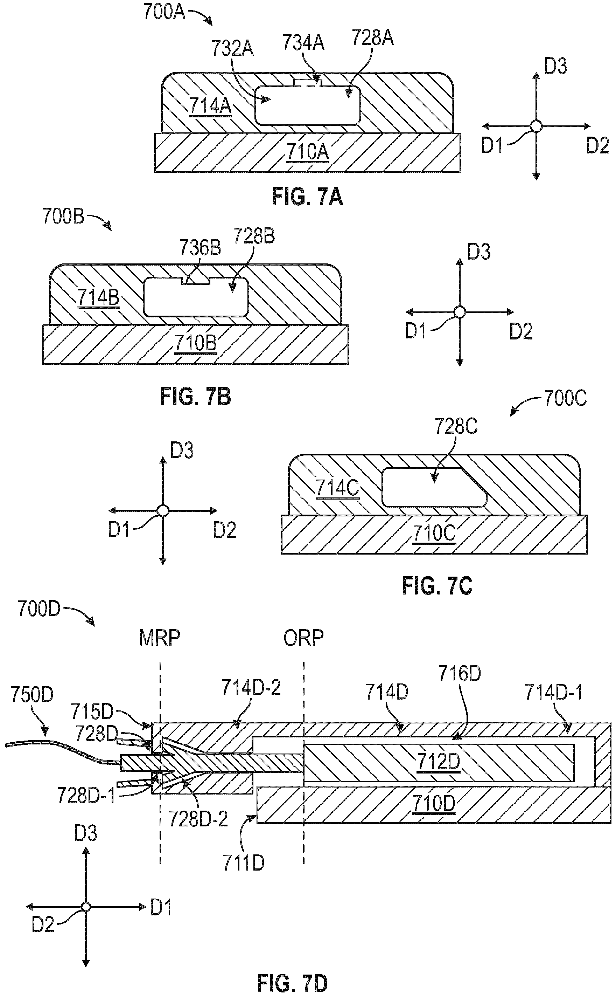

As one example, FIG. 7A is a front view of an optical engine 700A. The optical engine 700A has a lid 714A coupled with a substrate 710A. The lid 714A defines an optical feedthrough 728A configured to fully encircle an optical channel received therein. The optical feedthrough 728A is defined by the lid 714A so that the optical feedthrough 728A has a feedthrough region 732A and a keyway 734A (demarcated by a dashed line in FIG. 7A) contiguous with the feedthrough region 732A. The keyway 734A can accommodate or receive a complementary key of an optical connector fed through or into the optical feedthrough 728A. In this way, the keyway 734A can facilitate or correct a feedthrough orientation of an optical channel through the optical feedthrough 728A.

As another example, FIG. 7B is a front view of an optical engine 700B. The optical engine 700B has a lid 714B coupled with a substrate 710B. The lid 714B defines an optical feedthrough 728B configured to fully encircle an optical channel received therein. In this example embodiment, the lid 714B has a key 736B that extends into the optical feedthrough 728B. The key 736B can be received or accommodated by a complementary keyway of an optical connector fed through or into the optical feedthrough 728B. In this way, the key 736B can facilitate or correct a feedthrough orientation of an optical channel through the optical feedthrough 728B.

As yet another example, FIG. 7C is a front view of an optical engine 700C. The optical engine 700C has a lid 714C coupled with a substrate 710C. The lid 714C defines an optical feedthrough 728C configured to fully encircle an optical channel received therein. In this example embodiment, the optical feedthrough 728C defined by the lid 714C has an asymmetric shape as viewed along a feedthrough direction (e.g., the first direction D1 in this example embodiment). Advantageously, the asymmetric shape of the optical feedthrough 728C can facilitate or correct a feedthrough orientation of an optical channel through the optical feedthrough 728C.

FIG. 7D is a schematic cross-sectional view of an optical engine 700D. The optical engine 700D has a lid 714D coupled with a substrate 710D. The lid 714D and the substrate 710D collectively enclose a PIC 712D, e.g., within an interior 716D of the optical engine 700D. Like the embodiment of FIGS. 4A, 4B, and 4C, the lid 714D has a lid extension 714D-2 extending beyond a forward edge 711D of the substrate 710D. The lid extension 714D-2 extends from a lid base 714D-1. The lid base 714D-1 and the lid extension 714D-2 can be formed as a unitary or single-piece, monolithic component.

For the depicted embodiment of FIG. 7D, the lid 714D, or more particularly, the lid extension 714D-2 defines an optical feedthrough 728D configured to fully encircle an optical channel 750D received therein. In this example embodiment, the lid extension 714D-2 defines the optical feedthrough 728D so that the optical feedthrough 728D includes an external access region 728D-1 and an internal region 728D-2 that is contiguous with the external access region 728D-1. The internal region 728D-2 has a countersink shape as viewed along the second direction D2. The unique arrangement of the external access region 728D-1 and the internal region 728D-2 allows for mechanical latching mechanisms of the optical channel 750D to mechanically engage the lid 714D at a mechanical reference plane MRP, which is at an internal position relative to a forward surface 715D of the lid 714D. With the lid mechanically engaged, a force can be applied (e.g., by a spring of the optical channel 750D) to keep the optical facets (e.g., an optical ferrule of the optical channel 750D and the PIC 712D) aligned in optical engagement at an optical reference plane ORP. The mechanical reference plane separates the external access region 728D-1 from the internal region 728D-2 along the first direction D1 in this example embodiment.

In some embodiments of the present disclosure, an optical engine can include a lid formed of at least two shells, wherein one (or more) of the shells defines an optical feedthrough through which an optical channel can be fed.

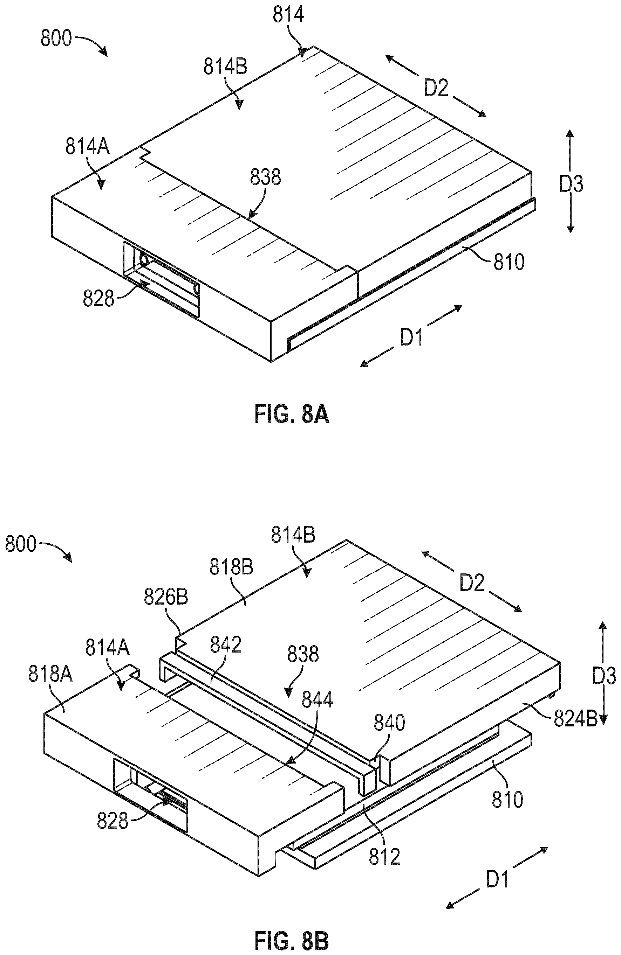

By way of example, with reference now to FIGS. 8A and 8B, an optical engine 800 is depicted. The optical engine 800 has a lid 814 coupled with a substrate 810. The lid 814 and the substrate 810 collectively enclose a PIC 812. For the depicted example embodiment, the lid 814 has an optical shell 814A and a thermal shell 814B that are removably coupled by an interlock 838, and as shown, the optical feedthrough 828 is defined by the optical shell 814A. The optical feedthrough 828 is configured to fully encircle an optical channel received therein. In some embodiments, the optical shell 814A and the thermal shell 814B can be formed of different materials. For instance, the thermal shell 814B can be formed of a conductive metal material and the optical shell 814A can be formed of a plastic material, for example.

The interlock 838 can be formed by complementary features of the optical shell 814A and the thermal shell 814B. As shown in FIG. 8B, the features of the thermal shell 814B forming the interlock 838 include a tongue 840 that extends from a top wall 818B of the thermal shell 814B and a lap member 842. The tongue 840 is an extension of the top wall 818B and the lap member 842 has a cross member connected to sidewalls at each end. The sidewalls of the lap member 842 are positioned inward of the first side wall 824B and the second side wall 826B of the thermal shell 814B, e.g., along the second direction D2. The feature of the optical shell 814A forming the interlock 838 is a groove 844 that receives the tongue 840 of the thermal shell 814B as well as the lap member 842. The groove 844 is formed by an interior surface of a top wall 818A of the optical shell 814A. When locked together, a portion of the top wall 818A of the optical shell 814A can be seated on the lap member 842 of the thermal shell 814B. In alternative embodiments, other suitable mechanical interlocks can be used, including a dovetail interlock, for example.

Advantageously, the lid 814 formed by two shells can allow for an "optical lid" or shell for optical feedthrough and a "thermal lid" or shell for heat management. An interlocking mechanism can be used to combine the shells and to secure them in place whilst also providing enhanced ability to access the interior of the optical engine if needed. Different materials can be used for the shells, which can provide localized optimization of material properties to enhance the optical and thermal aspects of the optical engine 800.

In some further embodiments of the present disclosure, an optical engine can include integrated features that complement an optical feedthrough defined by a lid of the optical engine. In such embodiments, for example, an optical engine can include a lid defining an optical feedthrough in which integrated features are positioned, including a Mechanical Transferrable (MT) ferrule and mechanical mating features, such as Multifiber Push On (MPO) mating features. Such features can provide an optical and mechanical interface at the optical feedthrough.

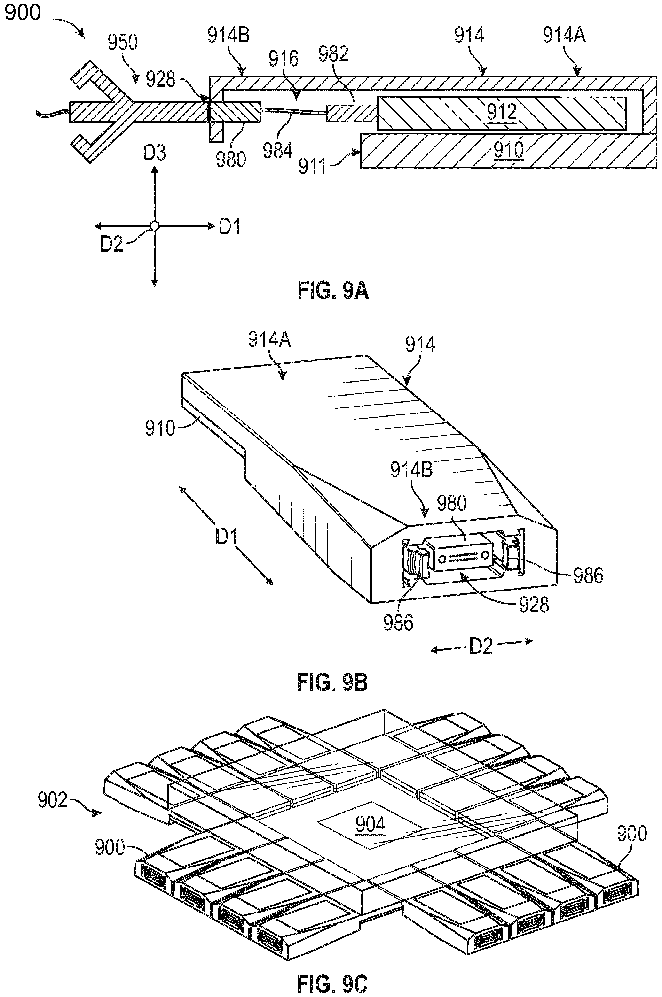

By way of example, with reference now to FIGS. 9A and 9B an optical engine 900 is depicted. The optical engine 900 has a lid 914 coupled with a substrate 910. The lid 914 and the substrate 910 collectively enclose a PIC 912, e.g., within an interior 916 of the optical engine 900. Like the embodiment of FIGS. 4A, 4B, and 4C, the lid 914 has a lid extension 914B extending beyond a forward edge 911 of the substrate 910. The lid extension 914B extends from a lid base 414A. The lid base 914A and the lid extension 914B can be formed as a unitary or single-piece, monolithic component.

For the depicted embodiment of FIGS. 9A and 9B, the optical engine 900 includes an MT ferrule 980 integrated into the lid extension 414B. The MT ferrule 980 can be optically coupled with an FAU 982 that is optically coupled with the PIC 912. A fiber pigtail 984 can optically couple the MT ferrule 980 with the FAU 982. The lid extension 414B can define the optical feedthrough 928. The MT ferrule 980 can be positioned, at least in part, in the optical feedthrough 928. A portion of the MT ferrule 980 can be positioned within the interior 916. In FIG. 9A, an optical channel 950 is coupled with the MT ferrule 980.

The optical engine 900 can also include mating features, such as MPO mating features. As illustrated, retention posts 986 are positioned on opposing sides of the MT ferrule 980. The retention posts 986 are each movable between a neutral position and a biased position. For instance, when no optical connector is connected to the MT ferrule 980, e.g., as shown in FIG. 9B, the retention posts 986 are each in their respective neutral positions. When an optical connector is connected to the MT ferrule 980, the retention posts 986 can each be deflected (e.g., outward away from the MT ferrule 980 in opposing directions along the second direction D2) and moved into their respective biased positions. In their respective biased positions, the retention posts 986 contact the optical connector with biasing engagement, which retains the optical connector relative to the MT ferrule 980 and the optical engine 900 generally. The retention posts 986, or mechanical mating features, can be positioned, at least in part, within the optical feedthrough 928, e.g., as shown in FIG. 9B.

FIG. 9C is a perspective view of an opto-electronic apparatus 902 that includes a plurality of optical engines 900 configured as in FIGS. 9A and 9B. The opto-electronic apparatus 902 includes an electronic IC 904, which can be an NPU, for example. The optical engines 900 can be arranged about the electronic IC 904 as shown in FIG. 9C. Advantageously, due to the integrated nature of the optical engines 900 as disclosed above, opto-electronic apparatus 902 of FIG. 9C can allow for elimination of one or more mid-board optical connectors (see FIG. 1 showing mid-board optical connectors 122-2).

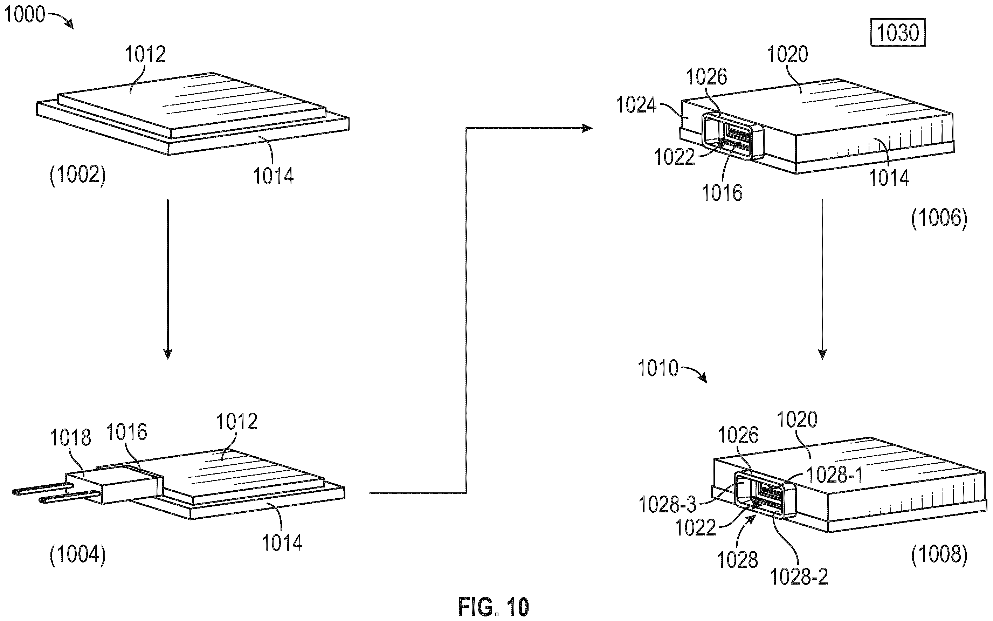

FIG. 10 is a flow diagram for a method 1000 of assembling an optical engine according to an embodiment of the present disclosure. While FIG. 10 depicts an optical engine 1010 being assembled in accordance with the method 1000, the method 1000 can be utilized to assemble other optical engines, such as any of those disclosed herein.

At 1002, the method 1000 can include coupling a PIC with a substrate. For instance, in FIG. 10, a PIC 1012 is shown coupled with a substrate 1014. The PIC 1012 can be placed atop the substrate 1014, e.g., in a Chip-On-Chip (COC) arrangement.

At 1004, the method 1000 can include coupling a lens array to the PIC. A lens array can be coupled with a PIC as set forth below.

A lens array can be attached to an optical alignment tool. For instance, as shown in FIG. 10, a lens array 1016 is shown attached to an optical alignment tool 1018. The lens array 1016 can include one or more lenses. The optical alignment tool 1018 can include a tool body and one or more optical fibers mated therewith. A light source, such as a laser, can be housed within the tool body. The optical fibers can be used to provide alignment feedback, e.g., when the lens array 1016 is aligned with the PIC 1012. The alignment feedback can be provided to a computing system associated with the optical alignment tool 1018. The computing system can have one or more non-transitory memory devices and one or more processors, which can be embodied in one or more computing devices. The one or more non-transitory memory devices can store instructions that, when executed by the one or more processors, cause the one or more processors to perform operations, such as controlling a robot to adjust alignment of the lens array 1016 relative to the PIC 1012 based at least in part on alignment feedback provided by the optical alignment tool 1018. Optical signals can be propagated through the optical fibers of the optical alignment tool 1018 to determine whether such optical signals are propagating optimally through the lens array 1016 to the waveguides of the PIC 1012. In some implementations, a robot or robot arm can be adjusted to align the lenses of the lens array 1016 relative to waveguides of the PIC 1012 based at least in part on the alignment feedback provided by the optical alignment tool 1018. In other implementations, voice commands or other instructions, such as visuals on an augmented reality application, can be provided to a user based at least in part on the alignment feedback provided by the optical alignment tool 1018.

When the alignment feedback indicates that the optical signals pass through the lens array 1016 and to the waveguides of the PIC 1012 with one or more characteristics (e.g., an optical signal intensity, a delay from input to output, an attenuation of the optical signal, a physical alignment of the lenses of the lens array 1016 relative to the waveguides of the PIC 1012, a combination thereof, etc.) within a predetermined range, the one or more conditions can be deemed satisfied. Consequently, the lens array 1016 can be considered aligned with respect to the waveguides of the PIC 1012 and the lens array 1016 can be coupled with the PIC 1012 in the aligned position, e.g., by any suitable technique. After coupling the lens array 1016 to the PIC 1012, the optical alignment tool 1018 can be detached from the lens array 1016.

At 1006, the method 1000 can include coupling a lid to the substrate. For instance, as illustrated in FIG. 10 at 1006, a lid 1020 is shown coupled with the substrate 1014. In this regard, the PIC 1012 is enclosed within the interior defined by the lid 1020 and the substrate 1014. The lid 1020 defines an optical feedthrough 1022 configured to fully encircle an optical channel received therein. In this example, a forward wall 1024 and a lead-in draft 1026 of the lid 1020 define the optical feedthrough 1022. The lid 1020 is coupled with the substrate 1014 so that the optical feedthrough 1022 is aligned or in communication with the lens array 1016.

In some implementations, the lid 1020 can include a coarse alignment feature 1028 (or features) at the optical feedthrough 1022. In FIG. 10, the lead-in draft 1026 of the lid 1020 includes the coarse alignment feature 1028, which includes a top chamfer 1028-1, a bottom chamber 1028-2, and sidewall chamfers 1028-3 (only one of which is labeled in FIG. 10). The coarse alignment feature 1028 is aligned with the lens array 1016 (when the lens array 1016 is coupled with the PIC 1012). The chamfered edges of the lid 1020 can collectively define a perimeter guiding edge along a perimeter of the optical feedthrough 1022 or access opening to the lens array 1016, e.g., as shown in FIG. 10.

In some implementations, in coupling the lid 1020 to the substrate 1014, the lid 1020 is arranged relative to the substrate 1014 and the lens array 1016 via feedback from a machine vision system 1030. The machine vision system 1030 can include an image device, such as a camera or video camera, and a computing system communicatively coupled thereto. The machine vision system 1030 can also include a robot arm that can be controlled to assemble the optical engine 1010. The computing system can have one or more non-transitory memory devices and one or more processors, which can be embodied in one or more computing devices. The one or more non-transitory memory devices can store instructions that, when executed by the one or more processors, cause the one or more processors to perform operations, such as controlling the robot arm to assemble the lid 1020 relative to the substrate 1014 based at least in part on feedback received from the image device. In some implementations, the machine vision system 1030 can also be used to assemble the lens array 1016 relative to the PIC 1012.

At 1008, the method 1000 can include curing the lid relative to the substrate. For instance, as shown in FIG. 10 at 1008, the lid 1020 is shown being cured relative to the substrate 1014. The lid 1020 can be cured relative to the substrate 1014 in any suitable manner. After cure, the optical engine 1010 can be considered fully assembled. In alternative implementations, an FAU can be coupled with the PIC as described above instead of the lens array. In this regard, an optical element (e.g., a lens array or FAU) can be coupled with the PIC in accordance with the method 1000.

In the current disclosure, reference is made to various embodiments. However, the scope of the present disclosure is not limited to specific described embodiments. Instead, any combination of the described features and elements, whether related to different embodiments or not, is contemplated to implement and practice contemplated embodiments. Additionally, when elements of the embodiments are described in the form of "at least one of A and B," or "at least one of A or B," it will be understood that embodiments including element A exclusively, including element B exclusively, and including element A and B are each contemplated. Furthermore, although some embodiments disclosed herein may achieve advantages over other possible solutions or over the prior art, whether or not a particular advantage is achieved by a given embodiment is not limiting of the scope of the present disclosure. Thus, the aspects, features, embodiments and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

In view of the foregoing, the scope of the present disclosure is determined by the claims that follow.

## Claims

1. An optical engine, comprising:
a lid defining an optical feedthrough configured to fully encircle an optical channel received therein; and
a photonics integrated circuit (PIC) covered by the lid and configured to optically couple with the optical channel.

2. The optical engine of claim 1, further comprising:
a substrate, wherein the PIC is disposed on the substrate and the lid contacts the substrate, wherein the lid and the substrate collectively enclose the PIC, and
wherein the lid has a lid extension extending beyond a forward edge of the substrate, the lid extension defines the optical feedthrough.

3. The optical engine of claim 2, wherein the optical engine defines a first direction, and wherein the lid extension extends along the first direction a length that is at least a quarter of a length of the substrate that extends along the first direction.

4. The optical engine of claim 2 or 3, wherein the optical engine defines a feedthrough direction, and wherein the lid extension extends along the feedthrough direction so as to be operable to accommodate an optical ferrule and a spring of the optical channel.

5. The optical engine of any of claims 2 to 4, wherein the lid extension defines a look-through that allows for visibility of an optical interface where an optical ferrule of the optical channel interfaces with the PIC or an optical component coupled with the PIC.

6. The optical engine of any preceding claim, wherein the lid has a sidewall that defines the optical feedthrough.

7. The optical engine of any preceding claim, wherein one or more of:
A) the lid has a sidewall and a lead-in draft that extends from the sidewall, the sidewall and the lead-in draft collectively define the optical feedthrough;
B) the optical feedthrough has a feedthrough region and a keyway contiguous with the feedthrough region;
C) the lid has a key that extends into the optical feedthrough;
D) the optical feedthrough has an asymmetric shape as viewed along a feedthrough direction of the optical channel;
E) the lid has a top wall, and wherein the optical feedthrough is defined by the top wall;
F) the lid has a sidewall and a top wall, and wherein the optical feedthrough is defined collectively by the sidewall and the top wall.

8. The optical engine of any preceding claim, wherein the optical feedthrough is one of a plurality of optical feedthroughs defined by the lid, and wherein the plurality of optical feedthroughs of the lid include a first optical feedthrough and a second optical feedthrough defined by a same sidewall of the lid.

9. The optical engine of any preceding claim, wherein the optical feedthrough is one of a plurality of optical feedthroughs defined by the lid, and wherein the plurality of optical feedthroughs of the lid include a first optical feedthrough and a second optical feedthrough, the first optical feedthrough and the second optical feedthrough are defined by different sidewalls of the lid.

10. The optical engine of any preceding claim, wherein the lid has an optical shell and a thermal shell that are removably coupled with one another, the optical feedthrough is defined by the optical shell.

11. The optical engine of claim 10, wherein the optical shell and the thermal shell are formed of different materials.

12. The optical engine of any preceding claim, further comprising:
a substrate, and wherein the lid has a lid extension extending beyond a forward edge of the substrate; and
a mechanically transferrable (MT) ferrule integrated into the lid extension and optically coupled with a fiber array unit that is optically coupled with the PIC, the MT ferrule is positioned at least in part within the optical feedthrough.

13. The optical engine of any preceding claim, wherein the lid has a coarse alignment feature that includes one or more chamfered edges at the optical feedthrough.

14. An opto-electronic apparatus, comprising:
an optical channel; and
at least one optical engine, comprising:
a lid defining an optical feedthrough that fully encircles the optical channel received therein; and
a photonic integrated circuit covered by the lid and optically coupled with the optical channel.

15. A method, comprising:
coupling a photonic integrated circuit (PIC) with a substrate;
coupling an optical element with the PIC; and
coupling a lid with the substrate so that an optical feedthrough defined by the lid is aligned with the optical element, the optical feedthrough being configured to fully encircle an optical channel received therein.
